# EUROPEAN PATENT APPLICATION

(11) **EP 3 919 574 A1**
(43) Date of publication of application: **08.12.2021**
(21) Application number: 20177988.1
(22) Date of filing: 03.06.2020
(51) Int. Cl.: C09D 5/03, C09D 7/61, C08K 3/36, C08K 3/22

(54) **ONE-COMPONENT POWDER COATING COMPOSITION AND SUBSTRATE COATED WITH SUCH POWDER COATING COMPOSITION**

(71) Applicant: Akzo Nobel Coatings International B.V., 1077 WW Amsterdam (NL)
(72) Inventor: KITTLE, Kevin Jeffrey, NL-6824 BM Arnhem (NL); GONZALEZ ALVAREZ, Maria Jose, NL-6824 BM Arnhem (NL)
(74) Representative: Akzo Nobel IP Department

(57) **Abstract**

The invention relates to a one-component powder coating composition comprising a curable resin and one or more curing additives for curing the curable resin, wherein the powder coating composition comprises:
- one powder coating component comprising the curable resin and the one or more curing additives;
- in the range of from 0.1 to 15.0 wt% of a first dry-blended inorganic particulate additive consisting of inorganic components i), ii), and iii), wherein component i) is non-coated aluminium oxide or non-coated silica, component ii) is aluminium hydroxide and/or aluminium oxyhydroxide, and component iii) is silica, and wherein, if component i) is non-coated silica, component iii) does not comprise non-coated silica; and
- in the range of from 0.1 to 35 wt% of a second dry-blended inorganic particulate additive,
wherein the powder coating composition comprises in the range of from 1.0 to 40 wt% of dry-blended inorganic particulate additive, wherein the wt% of dry-blended inorganic particulate additive is based on the weight of the one powder coating component, and wherein the second dry-blended inorganic particulate additive is free of aluminium oxide, silica, aluminium hydroxide and aluminium oxyhydroxide.

The invention further relates to a substrate coated with such powder coating composition.

## Description

### Field of the Invention

The present invention relates to a one-component powder coating composition comprising a curing system comprising a curable resin and one or more curing additives for curing the curable resin, and to a substrate coated with such powder coating composition.

### Background of the Invention

Powder coating compositions are solid compositions that generally comprise a solid film-forming or binder polymer or mixtures of different solid film-forming polymers, usually with one or more pigments and, optionally, extenders and one or more performance additives such as plasticizers, stabilizers, degassing agents, and flow aids. The film-forming polymers are usually thermosetting polymers that cure upon heating, typically in the presence of a crosslinking agent, which may itself be a polymer. Generally, the polymers have a glass transition temperature (Tg), softening point or melting point above 30 °C.

Conventionally, the manufacture of a powder coating composition comprises melt-mixing the components of the composition. Melt-mixing involves high speed, high intensity mixing of dry ingredients followed by heating of the mixture to a temperature above the softening temperature of the uncured polymer, but below the curing temperature, in a continuous compounder such as a single or twinscrew extruder to form a molten mixture. The extruded molten mixture is rolled into the shape of a sheet, cooled to solidify the mixture, and subsequently crushed to flakes and subsequently pulverized to a fine powder. Generally, the powder is then subjected to a sequence of particle sizing and separation operations, such as grinding, classifying, sifting, screening, cyclone separation, sieving and filtering.

The thus-obtained powder coating composition is then applied to a substrate and heated to melt and fuse the particles and to cure the coating. Powder coating compositions may be applied by fluidized-bed processes wherein the substrate is preheated and dipped in a fluidized bed of the powder resulting in the powder fusing on contact with hot surface and adhering to the substrate, by electrostatic fluidized-bed processes, or by electrostatic spray processes wherein the powder coating particles are electrostatically charged by electrodes within a fluidized bed or by an electrostatic spray gun and directed to be deposited onto an earthed substrate.

Powder coating compositions are generally formulated as so-called one-component compositions prepared by melt-mixing all ingredients together. It is believed that melt-mixing of all ingredients is needed in order to mix film-forming compounds (curable resin(s) and curing additives), pigments and performance additives in close proximity to each other so that they can coalescence and cure to form a coherent coating with integrity and the desired properties. Occasionally small amounts of solid additive, typically up to 1 wt%, are dry-mixed with the powder coating particles formed by melt-mixing, in particular to improve flowability (so-called dry flow agents).

Other particulate additives, for example matting agents such as silica, extenders, color pigments, biocidal pigments, and corrosion inhibiting pigments, are typically incorporated in the powder coating particles during melt-mixing. The particulate additive is therefore embedded in resin, which may negatively affect its functionality. The amount of particulate additive that can be added in a melt-mixing step is limited in view of processability. Moreover, a high amount of particulate additive would lead to unacceptably reduced surface flow during curing of the powder coating.

Pigments with a metallic effect, such as metallic flakes or mica flakes, cannot be added during the melt-mixing step since the pigment flakes would be crushed during the subsequent milling step, which would be detrimental to the metallic effect. Typically such flakes are therefore added to powder coating compositions in a so-called bonding step. Such bonding step is known in the art and typically comprises: heating powder coating particles (obtained by melt-mixing as described above) to a temperature around the glass transition temperature but below the curing temperature of any binder polymer in the powder coating particles under an inert atmosphere; adding the pigment flakes with metallic effect to the heated powder coating particles under stirring whilst maintaining the temperature until the pigment flake is bonded to the powder coating particles, typically for 10-20 minutes; and cooling the powder coating composition.

Such bonding step is, however, time and energy intensive and is restrictive in terms of batch size and the amount of pigment that can be used. The bonding process, moreover, easily breaks the pigment flakes. For a powder coating composition that cures at a relatively low temperature, a bonding step is particularly undesired, since the additional heating step could trigger premature onset of curing.

Powder coating compositions wherein pigments with a metallic effect are dry-blended with the powder coating particles are available. These compositions, however, generally show less stability in application, reduced fluidity, and less surface appearance due to flake agglomeration and uneven coverage of the metallic flakes.

In WO 00/01774 is disclosed a powder coating composition comprising film-forming polymeric powder coating particles with a standard particle size distribution and dry-blended therewith at least one appearance-modifying additive and a further additive comprising wax-coated silica or consisting of alumina together with aluminium hydroxide. The appearance-modifying additive(s) in WO 00/01774 may be coloured polymeric material, a fine powder of polymeric material for glass reduction, polymeric texturing additive(s), or mica pigments or other lustre pigments in an amount up to 10 wt%.

There is a need for powder coating compositions in a variety of aesthetic effects or a variety of functionality wherein the aesthetic effect or functionality can be controlled whilst avoiding processability problems.

### Summary of the Invention

It has now been found that particulate additive that would normally not pass through a melt-mixing step without affecting the functionality or the amount that can be added, can be dry-blended with a powder coating component, even in relatively high amounts, without negatively affecting the processability whilst still achieving a coherent film with desired film properties.

Accordingly, the invention provides in a first aspect a one-component powder coating composition comprising a curable resin and one or more curing additives for curing the curable resin, wherein the powder coating composition comprises:
- one powder coating component comprising the curable resin and the one or more curing additives;
- in the range of from 0.1 to 15.0 wt% of a first dry-blended inorganic particulate additive consisting of inorganic components i), ii), and iii), wherein component i) is non-coated aluminium oxide or non-coated silica, component ii) is aluminium hydroxide and/or aluminium oxyhydroxide, and component iii) is silica, and wherein, if component i) is non-coated silica, component iii) does not comprise non-coated silica; and
- in the range of from 0.1 to 35 wt% of a second dry-blended inorganic particulate additive,
wherein the powder coating composition comprises in the range of from 1.0 to 40 wt% of dry-blended inorganic particulate additive, wherein the wt% of dry-blended inorganic particulate additive is based on the weight of the one powder coating component, and wherein the second dry-blended inorganic particulate additive is free of aluminium oxide, silica, aluminium hydroxide and aluminium oxyhydroxide.

In a second aspect, the invention provides a substrate coated with a powder coating composition according to the first aspect of the invention.

### Detailed Description of the Invention

The powder coating composition according to the invention comprises a curing system comprising a curable resin and one or more curing additives for curing the curable resin.

Reference herein to a curing additive is to a compound that is needed for the curing of the curable resin, such as a curing agent that crosslinks with the curable resin, or that affects the speed of the curing reaction, such as a curing catalyst, a free-radical initiator such as a thermal radical initiator or a photo initiator, an accelerator, or an inhibitor. Reference herein to a curing catalyst is to a compound that catalyzes the cross-linking reaction between curable resin and a crosslinking curing agent, or, in case of a self-crosslinking curable resin, catalyzes the self-crosslinking reaction.

The one or more curing additives for curing the curable resin preferably comprise a curing agent that crosslinks with the curable resin and/or a curing catalyst. A crosslinking curing agent may be a resin in itself, such as for example an epoxy resin that crosslinks with a carboxyl-functional polyester resin or a polyamine resin that crosslinks with an epoxy resin. It will be appreciated that in case of a curing system with a curable resin and a curing agent that is a resin itself, any of the two resins can be considered the curable resin or the curing additive.

The powder coating composition is a one component powder coating composition comprising one powder coating component comprising the curable resin and the one or more curing additives. The powder coating composition is thus free of any further powder coating component.

Reference herein to a powder coating component is to powder coating particles that are obtained by melt-mixing at least two powder coating ingredients in a compounder such as an extruder. Since a powder coating component is obtained by melt-mixing, it comprises a polymer that is able to soften, i.e. melt, in the compounder. This polymer may be the curable resin and/or a curing agent for the curable resin that is a resin in itself. A powder coating component optionally comprises further powder coating ingredients, such as for example pigment, extender, or performance additive(s), for example melt flow agent, degassing agent, or dispersing agent.

Since the powder coating composition of the invention is a one-component powder coating composition, the one powder composition comprises all of the curable resin and of the one or more curing additives.

The powder coating component may have any suitable particle size. Preferably, the powder coating component has small particles, i.e. smaller than standard particle size powder coating particles. The powder coating component preferably has a particle size distribution with a Dᵥ90 of at most 50 µm and a Dᵥ50 of at most 30 µm, more preferably with a Dᵥ90 is at most 45 µm and a Dᵥ50 is at most 25 µm, preferably at most 20 µm. For practical reasons, the Dᵥ90 is preferably not lower than 3 µm and the Dᵥ50 is preferably not lower than 1 µm.

Dᵥ90 is the particle size value at which 90% of the total volume of particles has a particle size below that value. Accordingly, Dᵥ50 is the particle size value at which 50% of the total volume of particles has a particle size below that value. Reference herein to Dᵥ90 or Dᵥ50 is to Dᵥ90 or Dᵥ50 as determined by laser diffraction according to ISO 13320 using the Mie model.

Preferably, the powder coating component has a particle size distribution such that the ratio between Dᵥ90 and Dᵥ50 is in the range of from 1.5 to 4.0.

In one embodiment, the particle size distribution of the powder coating component is such that Dᵥ90 is at most 25 µm, preferably at most 20 µm, and Dᵥ50 is at most 12 µm. Such small particles are generally obtained by jet-milling. It has been found that a powder coating composition with such small powder coating particles provides better aesthetics of the cured coating through better flow and levelling. Moreover, thinner films can be sprayed.

The curing system may be any curing system comprising a curable resin and one or more curing additives known to be suitable for powder coating compositions. Such curing systems are well known in the art.

Suitable curable resins are for example carboxyl-functional resins such as carboxyl-functional polyester, polyester-amide or (meth)acrylate-based resins; amine-functional resins such as polyamide or polyester-amide resins; hydroxyl-functional resins; epoxy or glycidyl-functional resins; anhydride-functional resins; and resins with unsaturated bonds such as unsaturated polyester.

Curing additives such as crosslinking curing agents or curing catalysts for curing such curable resins are well known in the art. Suitable curing additives for curing carboxyl-functional resins are for example β-hydroxyalkylamides or polyisocyanate such as triglycidyl isocyanurate.

In one embodiment, the curable resin is carboxyl-functional polyester or carboxyl-functional polyacrylate, preferably carboxyl-functional polyester, and the one or more curing additives comprise a crosslinking agent, preferably a β-hydroxyalkylamide or a polyisocyanate, preferably triglycidyl isocyanurate. Preferably, the curable resin is carboxyl-functional polyester and the one or more curing additives comprise a β-hydroxyalkylamide as crosslinking agent.

In other embodiments, the curing system may suitably be an epoxy-polyester system or an epoxy-amine system. In an epoxy-polyester curing system, the one or more curing additives is an epoxy resin and the curable resin is a polyester resin with crosslinkable functional groups. The epoxy resin crosslinks with the functional groups on the polyester resin. In an epoxy-amine curing system, the one or more curing additives is a polyamine resin and the curable resin is an epoxy resin. The polyamine resin acts as curing agent that crosslinks the epoxy resin.

It is an advantage of the powder coating composition according to the invention that a coating with a metallic or luster appearance can be obtained, even with a curing system that cures at low temperature. In one embodiment therefore, the curing system is capable of curing at a temperature below 160 °C, preferably below 140 °C. Such curing systems are well-known in the art.

The powder coating composition comprises in the range of from 0.1 to 15 wt%, preferably of from 0.2 to 10, more preferably of from 0.3 to 5.0 wt%, even more preferably of from 0.3 to 2.0 wt%, of a first dry-blended inorganic particulate additive. The first dry-blended inorganic particulate additive consists of inorganic components i), ii), and iii), wherein:
- component i) is non-coated aluminium oxide or non-coated silica;
- component ii) is aluminium hydroxide and/or aluminium oxyhydroxide; and
- component iii) is silica.

If component i) is non-coated silica, component iii) does not comprise non-coated silica.

The powder coating composition comprises in the range of from 0.1 to 35 wt% of a second dry-blended inorganic particulate additive that does not comprise any of aluminium oxide, silica, aluminium hydroxide or aluminium oxyhydroxide. The total amount of dry-blended inorganic particulate additives in the powder coating composition should not exceed 40 wt%, preferably does not exceed 35 wt%, more preferably does not exceed 30 wt%, based on the weight of the powder coating component without dry-blended inorganic particulate additive(s).

The second dry-blended inorganic particulate additive may be any inorganic particulate material that may provide functionality to the powder coating composition, for example inorganic color pigment, inorganic pigment with metallic effect, biocidal pigment, anticorrosive pigment, extenders, opacifying pigment, conductive or anti-static pigment, infrared-absorbing pigment, radiation shielding pigment, glass flake, abrasion resistance agent or any combination of two or more thereof.

The second dry-blended inorganic particulate additive is an inorganic particulate material. The inorganic material may be surface-treated with an organic compound to modify its surface properties.

Any reference herein to the wt% of the first and/or second dry-blended inorganic particulate additive is to the wt% based on the weight of the one powder coating component.

The first inorganic particulate additive is dry-blended with the one powder coating component. The additive may be dry-blended with the powder coating component as a mixture of inorganic components i), ii) and iii), or as separate inorganic components. Preferably, at least components i) and ii) are premixed before dry-blending the additive with the powder coating component. Inorganic component iii) may be at least partly pre-mixed with inorganic components i) and ii) before dry-blending with the powder coating component or may be dry-blended separately with the powder coating component.

The first inorganic particulate additive - (partly) pre-mixed or as separate inorganic components i), ii) and iii) - may be dry-blended with the powder coating component in any suitable way, for example by:
- injecting the first inorganic particulate additive to the powder components at the mill where extruded melt-mixed powder component is milled to the desired particle size;
- adding the first inorganic particulate additive to the powder component at the stage of sieving after milling;
- post-adding the first inorganic particulate additive to the powder coating component in a powder tumbler, such as for example a Turbula® mixer, or other suitable mixing device.

Preferably, the first inorganic particulate additive is post-added to the powder coating component in a powder tumbler or other suitable mixing device.

The second dry-blended inorganic particulate additive is preferably post-added to the powder coating component in a powder tumbler or other suitable mixing device. The first and the second inorganic particulate additives may be dry-blended with the one powder coating component simultaneously.

Without wishing to be bound to any theory, it is believed that the first dry-blended inorganic particulate additive controls the charge of the powder coating component and of the second inorganic particulate additive, and therewith helps providing a stable and evenly distributed arrangement of the particles of the second dry-blended inorganic particulate additive and the powder coating components particles, so that both types of particles can be evenly sprayed and result in a coating with a smooth and consistent appearance.

Inorganic component (i) has a discharging function and is capable of exchanging electrons with the powder coating particles. It has Lewis acid and Lewis base sites at its surface so that it can accept and donate electrons. In order to have such discharging properties, inorganic component (i) is non-coated.

Inorganic component i) may be aluminium oxide or silica. Aluminium oxide is preferred, but in powder coating applications wherein aluminium oxide is undesired, for example for coatings that are in direct contact with drink water such as coatings for inner surfaces of drink water tubes, silica may be used instead. If inorganic component i) is aluminium oxide, it is preferably crystalline aluminium oxide. Any structural form (polymorph) of aluminium oxide may be used. Gamma-aluminium oxide, optionally in combination with delta-aluminium oxide, is particularly preferred.

If component i) is silica, it may be any type of non-coated silica, for example fumed silica (also referred to as pyrogenic silica), micronized amorphous silica (commercially available as Syloid ® from Grace), precipitated silica, mixed metal-silicon oxides, and naturally occurring silica such as for example diatomaceous earth. Preferably, the silica is amorphous silica. Micronized amorphous silica is particularly preferred.

Inorganic component ii) is aluminium hydroxide and/or aluminium oxyhydroxide, preferably crystalline aluminium hydroxide and/or aluminium oxyhydroxide. Any structural form (polymorph) of aluminium hydroxide or aluminium oxyhydroxide may be used, such as alpha-aluminium oxyhydroxide, alpha-aluminium hydroxide, gamma-aluminium oxyhydroxide, or gamma-aluminium hydroxide, preferably gamma-aluminium oxyhydroxide or gamma-aluminium hydroxide. Inorganic component ii) may be surface-treated (coated) to prevent caking of the component. Inorganic component ii) helps dispersing the other inorganic components in the dry-blended additive. It also has a buffering function in the sense that component ii) makes the functioning of inorganic components i) and iii) less sensitive to concentration.

Inorganic component iii) is silica. Any type of silica may be used, including fumed silica (also referred to as pyrogenic silica), precipitated silica, micronized amorphous silica, mixed metal-silicon oxides, and naturally occurring silica such as for example diatomaceous earth. Preferably, the silica is amorphous silica. The silica preferably is surface-treated (coated) to give it a positive or negative tribocharge. A negative tribocharge can for example be given by treating the silica surface with an organosilane such as dimethyldichlorosilane, hexamethyldisilazane, polydimethylsiloxane, or mixtures thereof. A positive tribocharge can for example be given by treating the silica surface with an organosilane with amino or ammonium end groups. Surface-treated fumed silicas with a negative or positive tribocharge are commercially available, for example from the HDK® fumed silica range ex. Wacker Chemie AG. Tribocharge can be determined by blowing silica particles off iron carrier particles in a q/m meter (ex. Epping GmbH, Germany).

Preferably, inorganic component iii) comprises or consists of a coated silica with a negative tribocharge.

The silica may be wax-coated silica. Preferably the powder coating composition is free of any wax-coated silica.

Inorganic component iii) may comprise more than one type of silica. If two different silicas are used, preferably one silica is a surface-treated silica with a negative tribocharge and the other silica is non-coated silica or is a surface-treated silica with a positive tribocharge.

It is believed that component iii) is able to charge the powder coating particles, either by wrapping powder coating particles or by tribocharging powder coating particles through particle-particle contact between silica particles from component iii) and powder coating particles. By controlling the amount and type of silica, the charge of the powder coating particles can be tuned. It can be tuned to provide a charge that balances the charge of the second dry-blended inorganic particulate additive or can be tuned to provide a charge of the powder coating particles that purposively disbalances the charge of the second dry-blended inorganic particulate additive. A balanced charge is advantageous if the ratio of powder coating particles and second dry-blended inorganic particulate additive to be deposited on an electrode panel is desired to be the same as in the powder coating composition. A slightly disbalanced charge can be used to spray a coating that is enriched in the second dry-blended inorganic particulate additive compared to its concentration in the powder coating composition when deposited on an electrode panel.

A combination of a surface-treated silica with a negative tribocharge and non-coated silica or a surface-treated silica with a positive tribocharge is particularly preferred if a powder coating composition with a balances charge of powder coating particles (particles of the powder coating component) and the second dry-blended inorganic particulate additive is desired. If a coating enriched in the second dry-blended inorganic particulate additive is desired, inorganic component iii) preferably consists of a coated silica with a negative tribocharge.

If component i) is non-coated silica, then component iii) does not comprise non-coated silica. In that case, the silica in component iii) is coated, preferably coated to obtain a negative tribocharge. The terms coated and surface-treated in connection with inorganic particles are used herein interchangeably.

If component i) is aluminium oxide, the Dᵥ50 of the aluminium oxide particles is preferably at most 0.2 µm. The Dᵥ50 of the aluminium hydroxide and/or aluminium oxyhydroxide particles in inorganic component ii) is preferably in the range of from 0.5 to 3.0 µm, more preferably of from 0.9 to 2.5 µm.

The Dᵥ50 of the silica in inorganic component iii) and, if present, in component i) is preferably at most 20 µm, more preferably in the range of from 0.01 to 15 µm.

To avoid undesired electrostatic phenomena, the powder coating composition generally does not comprise more than 1.0 wt% of aluminium oxide, based on the total weight of the composition. Preferably, the amount of aluminium oxide is in the range of from 0.01 to 0.4 wt%. The amount of component ii) in the powder coating composition generally does not exceed 5.0 wt%, based on the total weight of the composition. Preferably, the amount of component ii) is in the range of from 0.01 to 3 wt%, more preferably of from 0.02 to 1 wt%. In case inorganic component i) is aluminium oxide, the weight ratio of inorganic components i) and ii) in the first dry-blended inorganic particulate additive is preferably in the range of from 1:99 to 80:20, more preferably of from 10:90 to 60:40, even more preferably of from 20:80 to 50:50.

The percentage of component iii) in the first dry-blended inorganic particulate additive preferably is in the range of from 5 to 99 wt%, more preferably of from 15 to 60 wt%.

In one embodiment, the second dry-blended inorganic particulate additive is or comprises an inorganic pigment with a metallic effect. Such pigments are known in the art and are also referred to as pearlescent pigment or luster pigment. Such pigments are solid pigments, typically in flake form, and may be of metal, metal alloy, or non-metal material such as for example mica or borosilicates. Examples of pigments with a metallic effect are flakes of aluminium, aluminium alloy, stainless steel, copper, tin, lithium, bronze or brass, mica and borosilicate. Such flakes may be coated with metal oxides to provide special color effects.

The inorganic pigment with a metallic effect is dry-blended and a heating step for bonding is not needed, which is particularly advantageous for powder coating components that cure at a relatively low temperature.

It has been found that by dry-blending the pigment with a metallic effect, more of such pigment can be added than in the conventional bonding process. Breaking of pigment flakes that typically occurs due to the high speed stirring in the bonding step is avoided.

In the embodiment wherein the second dry-blended inorganic particulate additive is or comprises an inorganic pigment with a metallic effect, the powder coating composition may comprise any suitable amount of such pigment, depending on the desired aesthetic effect. Preferably, the powder coating composition comprises in the range of from 1.0 to 35 wt% of an inorganic pigment with a metallic effect, more preferably of from 5.0 to 30 wt%, even more preferably of from 10 wt% to 30 wt%, or even of from 12 wt% to 30 wt%.

The inorganic pigment with a metallic effect may be coated with a polymeric material before dry-blending the pigment with the powder coating component.

When bonding pigment with metallic effect to powder coating particles with a bonding step as described hereinabove, typically not all pigment flakes are bonded to the powder coating particles. It has now been found that by dry-blending the first inorganic particulate additive as described hereinabove with a powder coating component comprising bonded pigment with metallic effect and non-bonded pigment with metallic effect (such as pigment with metallic effect that failed to bond in a previous bonding step), a powder coating composition is provided that results in a cured film with improved surface appearance and luster effect compared to a cured film from the powder coating component comprising bonded pigment with metallic effect and non-bonded pigment with metallic effect without the first dry-blended inorganic particulate additive (cf. Examples 8 and 9).

Thus, in one embodiment, the one powder coating component comprises bonded pigment with metallic effect and the second dry-blended inorganic particulate additive is or comprises inorganic pigment with metallic effect, typically pigment with metallic effect that failed to bond in a previous bonding step. In this embodiment, the amount of non-bonded inorganic pigment with metallic effect will typically be in the range of from 0.1 to 3 wt%, based on the weight of the one powder coating component.

The second dry-blended inorganic particulate additive may have any suitable particle size, depending on the type of inorganic material and the desired effect. Typically, the average particle size (Dᵥ50) will be in the range of from 5 to 100 µm, preferably of from 5 to 50 µm.

Preferably the coating composition is free of any dry-blended additive other than the first and the second dry-blended inorganic particulate additives. If free of any such further dry-blended additive, the coating composition consists of the one powder coating component and the first and second dry-blended inorganic particulate additives.

In a second aspect, the invention provides a substrate coated with a powder coating composition according to the first aspect of the invention.

The substrate may be any substrate suitable for powder coating, for example a metal substrate. If the powder coating composition is a composition that cures at a relatively low temperature, i.e. at or below 140 °C, the substrate may be a substrate that cannot be exposed to high curing temperatures, such as wood, engineered wood, or plastic.

Prior to applying the powder coating composition according to the invention, the substrate surface may be treated by a surface treatment to remove any contaminants and/or to improve corrosion resistance of the substrate. Such surface treatments are well known in the art and commonly applied to surfaces to be coated with powder coatings.

The powder coating composition according to the invention may be applied as a topcoat over a first layer of powder coating composition. The first layer may then be a powder coating composition not according to the invention. Thus, in one embodiment, the substrate is coated with a first layer of powder coating composition and is then coated with a top layer of the powder coating composition according to the first aspect of the invention.

Due to the relatively small particle size of the powder coating components, the powder coating composition of the invention can be applied in a relatively thin layer. It has been found that even if applied in a thin layer, a coating with integrity and a consistent and even matt appearance is obtained.

The powder coating composition can be applied with any application technique known in the art, such as fluid bed application or spray application, preferably spray application with a corona gun.

The invention is further illustrated by means of the following non-limiting examples.

### Examples

In Table 1, the compositions of the first and second dry-blended inorganic particulate additives used in the Examples are shown. In first additive 1a, inorganic components i) and ii) and the surface-treated fumed silica were pre-mixed. In first additives 1b and 1d, all ingredients were pre-mixed.

**Table 1 - Dry-blended inorganic particulate additives (ingredients in wt%)**

| | | Dry-blended additive | | | | |
|---|---|---|---|---|---|---|
| | | first | | | | second |
| | | 1a | 1b | 1c | 1d | 2 |
| Aluminium oxide^{a} | i) | 12.5 | 20 | 100 | | |
| Aluminium hydroxide^{b} | ii) | 37.5 | 60 | | 67 | |
| Surface-treated fumed silica (negative tribocharge)^{c} | iii) | 12.5 | 20 | | 20 | |
| Non-coated silica^{d} | iii)/i)^{†} | 37.5 | | | 13 | |
| Pigment with metallic effect^{e} | | | | | | 100 |

| | | | | | | |
|---|---|---|---|---|---|---|
| ^{a} AEROXIDE® Alu C: fumed aluminium oxide; no surface treatment (non-coated). ^{b} MARTINAL OL 107C: surface-treated aluminium hydroxide. ^{c} HDK® H3004 (ex. Wacker): fumed silica, surface-treated with hexamethyldisilazane; Dv50 < 20 µm. ^{d} Syloid® C811 (ex. Grace): micronized amorphous porous silica; no surface treatment; average particle size 11 µm. ^{e} Iriodin® 307 Star Gold: mica flakes coated with a thin layer of metal oxide. ^{†} In additive 1d this is inorganic component i); in additives 1a, 1b, 1c it is inorganic component iii). | | | | | | |

### EXAMPLES 1 TO 7

**Table 2 - Powder coating component**

| | wt% |
|---|---|
| Carboxyl-functional polyester | 94.3 |
| Hydroxyalkylamide crosslinker¹ | 4.0 |
| benzoin (degassing agent) | 0.4 |
| melt flow agent² | 1.3 |
| Blue pigment³ | |

| | |
|---|---|
| ¹ Primid XL-552 ² BYK-LP G21191 ³ Irgalite® Blue PG (PB 15:3) | |

A powder coating component was prepared by melt-mixing all ingredients as indicated in Table 2 in an extruder. A part of the extruded powder coating component was milled and sieved to a standard particle size distribution (Dᵥ90 of 110 µm and a Dᵥ50 of 35 µm), another part was milled and sieved to a particle size distribution with a Dᵥ90 of 40 µm and Dᵥ50 of 15 µm, and a further part was jet-milled and sieved to obtain particle size distribution with a Dᵥ90 of 20 µm and a Dᵥ50 of 8 µm.

Powder coating compositions 1 to 7 were prepared by dry-blending one or two of the additives of Table 1 with the powder coating component in a Turbula powder mixer for 30 minutes as indicated in Table 3.

**Table 3 - Powder coating compositions**

| powder coating composition | Dᵥ90; Dᵥ50 (µm) | additive | amount of additive |
|---|---|---|---|
| 1* | 20; 8 | 2 | 25 wt% |
| 2 | 20; 8 | 1a + 2 | 1.6 wt% + 25 wt% |
| 3* | 40; 15 | 1c + 2 | 0.5 wt% + 15 wt% |
| 4 | 40; 15 | 1b + 2 | 1.0 wt% + 15 wt% |
| 5* | 110; 35 | 2 | 25 wt% |
| 6 | 110; 35 | 1d + 2 | 1.0 wt% +25 wt% |
| 7 | 110; 35 | 1b + 2 | 1.0 wt% +25 wt% |

| | | | |
|---|---|---|---|
| * comparison powder coating composition | | | |

### EXAMPLE 1 (comparison)

During dry-blending of comparison powder coating composition 1 (no first dry-blended inorganic particulate additive), the powder coating mixture already showed separation of powder coating particles and mica flake: pure mica flake deposited onto the walls of the mixing bottle of the Turbula mixer.

Powder coating composition 1 was sprayed at two aluminium electrodes, one at +30 kV and the other at -30 kV. The -30 kV electrode panel was coated with powder coating with very little mica flake deposited on it and the +30 kV electrode was coated with mica flake with very little powder coating particles. This shows that without the first dry-blended inorganic particulate additive, a powder coating composition with dry-blended mica flakes is very unstable to electrostatic separation.

### EXAMPLE 2

In order to assess the stability upon spraying, powder coating composition 2 was sprayed at two aluminium electrodes, one at +30 kV and the other at -30 kV. The two coated electrodes were cured at 200 °C for 15 minutes. With powder coating composition 2, a fully cured powder coating film was formed on both electrodes, each with the same gold metallic effect. This shows that the mixture of powder coating particles and mica flakes is stabilized towards electrostatic separation.

In a further test, powder coating composition 2 was sprayed using a standard negative corona gun at two electrode panels with different application voltages: -50 kV and -100 kV. Both electrode panels were cured at 200 °C for 15 minutes. Both panels gave the same metallic effect, with even coverage across the full panel and without signs of separation of the mica flake.

### EXAMPLE 3 (comparison)

Powder coating composition 3 was prepared by dry-blending 0.5 wt% of a standard fluidizing additive (aluminium oxide) and 15 wt% of mica flakes with a metallic effect with the powder coating component. The powder mix showed visible separation in the mixing bottle of the Turbula mixer, depositing pure mica flake onto the walls of the bottle.

Powder coating composition 3 was sprayed by a corona gun at 100 kV on to a metal panel at a film thickness of 70 µm. The panel was cured in a convection oven at 200 °C for 15 minutes to achieve full cure. The resulting cured powder coating was deficient in mica flake, showing uneven flake coverage and a poor metallic effect.

In a further test, powder coating composition 3 was sprayed at two aluminium electrodes, one at +30 kV and the other at -30 kV. The two coated electrodes were cured at 200 °C for 15 minutes. The appearance of the -30 kV electrode indicated a high preference for deposition of the powder coating particles, with negligible deposition of the mica flake. The appearance of the +30 kV electrode showed a high preference for the mica flake with little deposition of the powder coating particles.

### EXAMPLE 4

During dry-blending of comparison powder coating composition 4, the powder coating mixture showed some separation of powder coating particles and mica flake: powder coating particles deposited onto the walls of the mixing bottle of the Turbula mixer.

Powder coating composition 4 was sprayed by a corona gun at 100 kV on a metal panel at a film thickness of 70 µm. The panel was cured in a convection oven at 200 °C for 15 minutes to achieve full cure.

The powder coating composition had fully flowed and levelled on the panel, forming an integral powder film. The panel sprayed looked richer in pigment than the panel sprayed with comparison powder coating composition 3, with a good gold aesthetic. The mica flakes were fully bonded in the coating and could not be removed by rubbing with methyl ethyl ketone.

In a further test, powder coating composition 4 was sprayed at two aluminium electrodes, one at +30 kV and the other at -30 kV. The two coated electrodes were cured at 200 °C for 15 minutes. The appearance of the -30 kV electrode indicated a high preference for deposition of the mica flake, with negligible deposition of the powder coating particles. The appearance of the +30 kV electrode showed a high preference for the powder coating particles with little deposition of the mica flake.

### EXAMPLE 5 (comparison)

During dry-blending of comparison powder coating composition 5 (no first dry-blended inorganic particulate additive), the walls of the mixing bottle were completely coated in mica flake, indicating significant separation of the flake from the powder coating component.

Powder coating composition 5 was spray applied through a corona gun at 100 kV to a metal panel at a film thickness of 100 µm. The panel was cured in a convection oven at 200 °C for 15 minutes to achieve full cure.

The powder coating composition had fully flowed and levelled. Visual assessment of the panel showed poor deposition of the mica flake. The coating gave an unnatural metallic effect with reduced flake and significant pin-holing giving a "plastic like" appearance.

### EXAMPLE 6

During dry-blending of powder coating composition 6, the walls of the mixing bottle showed a very light dusting of an even, consistent mixture of powder and flake, and the bulk of the powder showed no signs of separation of mica flake from the powder coating component.

Powder coating composition 6 was sprayed at two electrodes (-30 kV and +30 kV) to ascertain mix stability to electrostatic separation. The two electrodes showed the same coating appearance and deposition.

### EXAMPLE 7

During dry-blending of comparison powder coating composition 7, the powder coating mixture showed some separation of powder coating particles and mica flake: powder coating particles deposited onto the walls of the mixing bottle of the Turbula mixer.

Powder coating composition 7 was spray-applied to a metal panel through a corona gun at 100 kV, at a film thickness of 100 µm. The panel was cured in a convection oven at 200 °C for 15 minutes to achieve full cure.

The powder coating composition had fully flowed and levelled. Visual assessment of the panel showed a rich metallic effect, with enriched deposition of metallic flake on the electrode. The flake coverage was even and without pin holes.

In a further test, powder coating composition 7 was sprayed at two aluminium electrodes, one at +30 kV and the other at -30 kV. The two coated electrodes were cured at 200 °C for 15 minutes. The appearance of the -30 kV electrode indicated a high preference for deposition of the mica flake, with negligible deposition of the powder coating particles. The appearance of the +30 kV electrode showed a high preference for the powder coating particles with little deposition of the mica flake.

The cured coatings from powder coating compositions 2 and 4, i.e. the compositions with smaller powder coating particles, were smoother and had a higher luster effect (more metallic looking) than cured coatings from powder coating compositions 6 and 7 (standard particle size powder coating particles).

### EXAMPLE 8 (comparison)

A powder coating composition comprising carboxyl-functional polyester as curable resin and β-hydroxyalkylamide as curing agent with bonded gold-colored mica flakes further comprising non-bonded gold-colored mica flakes and having a standard particle size distribution (Dᵥ90 is 110 µm; Dᵥ50 is 35 µm) was sprayed using a corona gun at -100 kV onto a metal panel. The panel was cured in a convection oven at 200 °C for 15 minutes to achieve full cure.

### EXAMPLE 9

The powder coating composition of example 8 was dry-blended with 1 wt% of first inorganic particulate additive 1b (see Table 1) in a Turbula powder mixer for 30 minutes. The resulting powder coating composition was sprayed using a corona gun at -100 kV onto a metal panel. The panel was cured in a convection oven at 200 °C for 15 minutes to achieve full cure. The cured coating looked richer in metallic pigment, giving a better gold aesthetic than the cured coating obtained in Example 8.

## Claims

1. A one-component powder coating composition comprising a curable resin and one or more curing additives for curing the curable resin, wherein the powder coating composition comprises:
- one powder coating component comprising the curable resin and the one or more curing additives;
- in the range of from 0.1 to 15.0 wt% of a first dry-blended inorganic particulate additive consisting of inorganic components i), ii), and iii), wherein component i) is non-coated aluminium oxide or non-coated silica, component ii) is aluminium hydroxide and/or aluminium oxyhydroxide, and component iii) is silica, and wherein, if component i) is non-coated silica, component iii) does not comprise non-coated silica; and
- in the range of from 0.1 to 35 wt% of a second dry-blended inorganic particulate additive,
wherein the powder coating composition comprises in the range of from 1.0 to 40 wt% of dry-blended inorganic particulate additive, wherein the wt% of dry-blended inorganic particulate additive is based on the weight of the one powder coating component, and wherein the second dry-blended inorganic particulate additive is free of aluminium oxide, silica, aluminium hydroxide and aluminium oxyhydroxide.

2. A one-component powder coating composition according to claim 1, wherein the powder coating component has a particle size distribution with a Dᵥ90 of at most 50 µm and a Dᵥ50 of at most 30 µm, preferably with a Dᵥ90 of at most 45 µm and a Dᵥ50 of at most 25 µm, more preferably with a Dᵥ90 of at most 45 µm and a Dᵥ50 of at most 20 µm, wherein Dᵥ90 and Dᵥ50 are determined by laser diffraction according to ISO 13320 using the Mie model.

3. A powder coating composition according to claim 1 or 2, wherein the powder coating component has a particle size distribution such that Dᵥ90 is at most 25 µm and Dᵥ50 is at most 12 µm.

4. A powder coating composition according to any one of the preceding claims, wherein the curing system is capable of curing at a temperature below 160 °C, preferably below 140 °C.

5. A powder coating composition according to any one of the preceding claims, wherein the amount of the first dry-blended inorganic particulate additive is in the range from 0.2 to 10 wt%, preferably of from 0.3 to 5.0 wt%.

6. A powder coating composition according to any one of the preceding claims, wherein inorganic component i) is aluminium oxide, and the weight ratio of inorganic components i) and ii) in the first dry-blended inorganic particulate additive is in the range of from 10:90 to 60:40.

7. A powder coating composition according to any one of the preceding claims, wherein the first dry-blended inorganic particulate additive comprises in the range of from 10 to 99 wt% of inorganic component iii), preferably of from 15 to 60 wt%.

8. A powder coating composition according to any one of the preceding claims, wherein inorganic component iii) comprises a coated silica with a negative tribocharge.

9. A powder coating composition according to any one of the preceding claims, wherein the powder coating composition is free of wax-coated silica.

10. A powder coating composition according to any one of the preceding claims, wherein the second dry-blended inorganic particulate additive consists of or comprises inorganic pigment with a metallic effect, inorganic color pigment, biocidal pigment, anticorrosive pigment, extender, opacifying pigment, conductive or anti-static pigment, infrared-absorbing pigment, radiation shielding pigment, glass flake, or a combination of two or more thereof.

11. A powder coating composition according to claim 10, wherein the second dry-blended inorganic particulate additive comprises an inorganic pigment with a metallic effect or consists of an inorganic pigment with a metallic effect.

12. A powder coating composition according to claim 11, wherein the powder coating composition comprises in the range of from 5 to 35 wt%, preferably of from 10 to 25 wt%, of an inorganic pigment with a metallic effect, based on the weight of the one powder coating component.

13. A powder coating composition according to claim 11, wherein the one powder coating component comprises bonded inorganic pigment with a metallic effect and the second dry-blended inorganic particulate additive comprises an inorganic pigment with a metallic effect or is an inorganic pigment with a metallic effect.

14. A substrate coated with a powder coating composition according to any one of the preceding claims.

15. The substrate according to claim 14, wherein the substrate is coated with a first layer of powder coating composition and is then coated with a top layer of the powder coating composition according to any one of claims 1 to 13.
